Europäisches Patentamt

European Patent Office

Office européen des brevets

(19)

(11) Veröffentlichungsnummer: **0 130 266**
**B1**

(12) # EUROPÄISCHE PATENTSCHRIFT

(45) Veröffentlichungstag der Patentschrift:
**16.09.87**

(51) Int. Cl.⁴: **G 11 B 33/04**

(21) Anmeldenummer: **83890104.9**

(22) Anmeldetag: **24.06.83**

(54) **Kassette zur Aufnahme plattenförmiger Gegenstände, insbesondere Disketten.**

(43) Veröffentlichungstag der Anmeldung:
**09.01.85 Patentblatt 85/2**

(45) Bekanntmachung des Hinweises auf die Patenterteilung:
**16.09.87 Patentblatt 87/38**

(84) Benannte Vertragsstaaten:
**AT BE CH DE FR GB IT LI LU NL SE**

(56) Entgegenhaltungen:
**FR - A - 1 229 166**
**GB - A - 924 481**
**GB - A - 1 462 438**
**US - A - 4 356 918**

(73) Patentinhaber: **Ernst Stadelmann Gesellschaft m.b.H.,**
**Bahnhofstrasse 8, A-4070 Eferding (AT)**

(72) Erfinder: **Kirchner, Balthasar, Bahnhofstrasse 8,**
**A-4070 Eferding (AT)**
Erfinder: **Schleicher, Siegfried, Bahnhofstrasse 8,**
**A-4070 Eferding (AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7, A-4020 Linz (AT)**

ACTORUM AG

## Beschreibung

Die Erfindung betrifft eine Kassette zur Aufnahme plattenförmiger Gegenstände, insbesondere Disketten, bestehend aus einem schachtelartigen Unterteil mit einem hochschwenkbaren Deckel, wobei das Schwenklager des Deckels etwa mit der Höhe des Unterteils entsprechendem Abstand vor der Deckelhinterkante liegt und im Bereich der Deckelhinterkante eine das Aufnahmefach bildende Klappe angelenkt ist. Ein Beispiel einer solchen Kassette ist beschrieben in GB-A-1 462 438.

Diese Kassetten haben sich zur Aufbewahrung von Disketten bereits gut bewährt, da sie einfach und billig herstellbar sind, ordentlich aufgehoben werden können und vor allem auch ein Aufnahmefach bieten, das einerseits bei geschlossenem Deckel eine vor Verschmutzung geschützte Diskettenablage und anderseits bei hochgeschwenktem Deckel ein Öffnen des Faches zur freien Zugänglichkeit der abgelegten Disketten erlaubt. Allerdings ist bisher die Klappe am Deckel nur lose angesetzt und soll schwerkraftsbedingt beim Hochschwenken des Deckels selbständig bis zu einem bodenseitigen Anschlag abklappen, um dann bei geöffnetem Fach die Disketten übersichtlich darbieten zu können und auch beim Suchen bestimmter Disketten gewissermassen ein Blättern in den Disketten zu ermöglichen. Auf Grund von nicht zu vermeidenden Herstellungstoleranzen kommt es aber meist zu einem Klemmen der Klappe, was ein händisches Öffnen des Faches bei hochgeschwenktem Deckel erfordert und damit die Handhabung der ganzen Kassette unpraktisch macht.

Der Erfindung liegt daher die Aufgabe zugrunde, eine Kassette der eingangs geschilderten Art mit geringstem Mehraufwand so zu verbessern, dass gleichzeitig mit dem Hochschwenken des Deckels auf jeden Fall auch ein sicheres Öffnen des Aufnahmefaches gewährleistet ist.

Die Erfindung löst diese Aufgabe dadurch, dass die Klappe mittels seitlicher Führungszapfen in eine Kulissenführung des Unterteiles eingreift, welche Kulissenführung im Öffnungssinn von einem Kreisbogenabschnitt um das Deckelschwenklager in einen von der Kreisbahn nach aussen abweichenden Endabschnitt übergeht. Solange sich daher die Führungszapfen im Kreisbogenabschnitt der Kulissenführung beim Verschwenken des Deckels bewegen, kommt es zu keiner Relativbewegung zwischen Deckel und Klappe, und das Fach bleibt geschlossen. Sobald aber die Führungszapfen den von der Kreisbahn abweichenden Abschnitt der Kulissenführung durchlaufen, ergibt sich eine Relativbewegung zwischen Deckel und Klappe, und das Fach wird zwangsweise geöffnet. Unabhängig von Herstellungstoleranzen oder auch von Verschmutzungen während längerer Verwendung ist so unmittelbar durch das Hochschwenken des Deckels auch die gewünschte Abklappbewegung der Klappe zum Öffnen des Aufnahmefaches garantiert. Beim Niederdrücken des Deckels, also bei der Rückbewegung, schliesst dann die Klappe, während sich die Führungszapfen im Endabschnitt der Kulissenführung bewegen und wird dann, sobald die Führungszapfen in den Kreisbogenabschnitt eingreifen, wieder zusammen mit dem Deckel in den Unterteil eingeschwenkt. Die Kassette gewährleistet so allein durch ein einhändiges Betätigen des Deckels automatisch das für eine bequeme Diskettenentnahme oder -ablage erforderliche Öffnen des Aufnahmefaches und sichert ausserdem durch das Schliessen des Faches vor dem eigentlichen Abschwenken beim Niederdrücken des Deckels die vorhandene Ordnung der eingelegten Disketten.

Günstig ist es auch, wenn bei Kassetten mit Seitenwangen an Deckel und Klappe diese Seitenwangen bei geschlossenem Aufnahmefach jeweils stumpf aufeinanderstossen und vorzugsweise zahnartig ineinandergreifende Kantenausformungen aufweisen. Durch dieses Aneinanderliegen von Deckel und Klappenseitenwangen entsteht nicht nur ein weitgehend geschlossenes Aufnahmefach, sondern es wird eine zusätzliche Führung bzw. Unterstützung der Klappenbewegung beim Verschwenken erreicht. Greifen dabei die Seitenwangen zahnartig ineinander, werden diese Verhältnisse noch verbessert, und ausserdem wird das Entstehen von geradlinig durchgehenden Spalten zwischen diesen Seitenwangen beim Öffnen des Aufnahmefaches verhindert, in die die Disketten hineinrutschen könnten, was das Aufkommen von Unordnung begünstigen würde und beim Schliessen sogar zu einer Beschädigung der Disketten führen könnte.

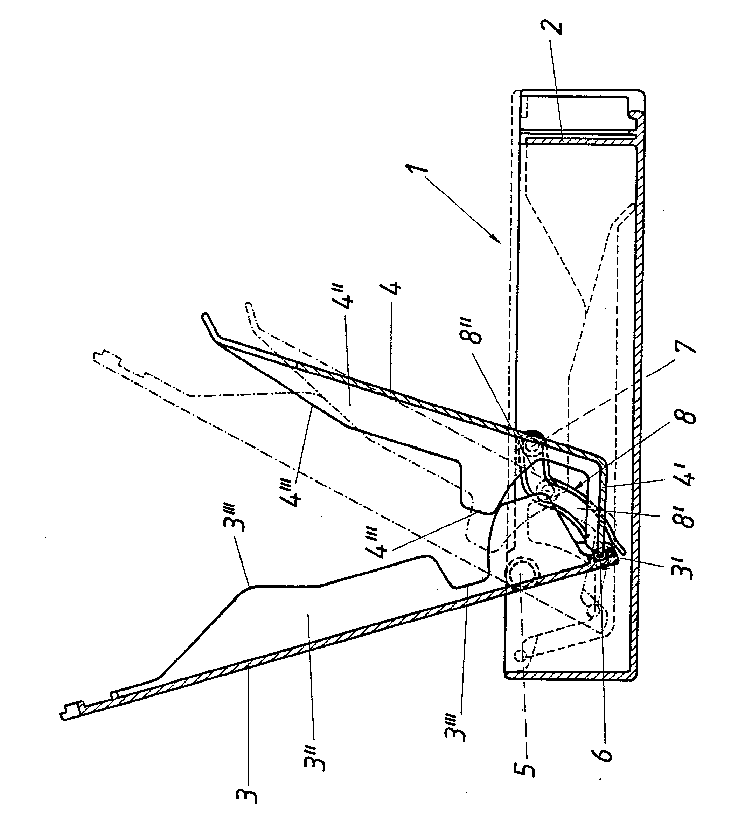

In der Zeichnung ist eine erfindungsgemässe Kassette beispielsweise in einem schematischen Längsschnitt dargestellt.

Eine zur Aufnahme von Disketten, Schallplatten, Tonbandkassetten oder anderen flachen Gegenständen bestimmte Kunststoffkassette 1 besteht aus einem schachtelartigen Unterteil 2, einem Deckel 3 und einer Klappe 4, wobei Deckel 3 und Klappe 4 miteinander das Aufnahmefach bilden. Der Deckel 3 ist über ein Schwenklager 5 im Unterteil 2 hochschwenkbar eingesetzt, welches Schwenklager 5 in einem Abstand, der etwa der Höhe des Unterteiles 2 entspricht, vor der Hinterkante 3' des Deckels 3 liegt, so dass beim Hochschwenken des Deckels die Hinterkante 3' in das Innere des Unterteils 2 abgeschwenkt wird. An dieser Hinterkante 3' ist die Klappe 4 mit ihrer Rückwand 4' über ein Scharnier 6 angelenkt, welche Klappe 4 darüber hinaus mit seitlichen Führungszapfen 7 in eine Kulissenführung 8 des Unterteiles 2 eingreift. Die Kulissenführung 8 besteht aus einem Kreisbogenabschnitt 8' um das Schwenklager 5 des Deckels 3 und einem daran anschliessenden etwa radial auswärts gerichteten Endabschnitt 8''.

Bei geschlossenem Deckel 3 wird das Aufnahmefach vollständig im Unterteil 2 eingeschlossen (strichlierte Darstellung), wobei die Seitenwangen 3'' und 4'' von Deckel 3 und Klappe 4 aufeinanderliegen und somit auch das Aufnahmefach im gewissen Sinn geschlossen ist. Schwenkt nun der Deckel 3 hoch, nimmt er die Klappe 4 mit sich, die dieser Schwenkbewegung ungehindert folgen kann, solange die Führungszapfen 7 im Bereich des Kreisbogenabschnittes 8' der Kulissenführung 8 laufen (strichpunktierte Darstellung). Erst wenn die Führungszapfen 7 vom Kreisbogenabschnitt 8' in den Endabschnitt 8'' eindringen, kommt es beim Weiterverschwenken des Deckels 3 zu einer Relativbewegung zwischen Klappe 4 und Deckel 3 im Sinne eines Öffnens des Aufnahmefaches (Vollstrichdarstellung). In dieser Lage ist das Aufnahmefach frei zugänglich, so dass die Disketten od. dgl. bequem eingeordnet werden können oder sich aus den eingelegten Disketten sofort die gesuchte herausfinden lässt. Durch Schliessen des Deckels 3 wird dann durch das Zusammenwirken von Scharnier 6 und Führungszapfen 7 bzw. Kulissenführung 8 das Aufnahmefach vorerst zwangsweise geschlossen, indem sich der Deckel 3 und die Klappe 4 relativ zueinander bewegen, bis die Führungszapfen 7 wiederum in den Kreisbogenabschnitt 8' der Kulissenführung 8 gelangen und die Seitenwangen 3'', 4'' aufeinanderliegen, worauf durch Weiterschwenken des Deckels 3 die Klappe 4 mitgenommen und wieder in den Unterteil 2 eingeschwenkt wird. Sowohl das Hochschwenken als auch das Abschwenken der Klappe 4 wird durch das eine gegenseitige Abstützung mit sich bringende Aufeinanderliegen der Seitenwangen 3'', 4'' erleichtert, und aufeinander abgestimmte Kantenausformungen 3''', 4''' dieser Seitenwangen, die beim Schliessen zahnartig ineinandergreifen, verhindern ein seitliches Austreten eingelegter Disketten od. dgl., da sie das Klaffen geradlinig durchgehender Spalte zwischen Deckel 3 und Klappe 4 vermeiden.

### Patentansprüche

1. Kassette (1) zur Aufnahme plattenförmiger Gegenstände, insbesondere Disketten, bestehend aus einem schachtelartigen Unterteil (2) mit einem hochschwenkbaren Deckel (3), wobei das Schwenklager (5) des Deckels (3) etwa mit der Höhe des Unterteiles (2) entsprechendem Abstand vor der Deckelhinterkante (3') liegt und im Bereich der Deckelhinterkante (3') eine das Aufnahmefach bildende Klappe (4) angelenkt ist, dadurch gekennzeichnet, dass die Klappe (4) mittels seitlicher Führungszapfen (7) in eine Kulissenführung (8) des Unterteiles (2) eingreift, welche Kulissenführung (8) im Öffnungssinn von einem Kreisbogenabschnitt (8') um das Deckelschwenklager (5) in einen von der Kreisbahn nach aussen abweichenden Endabschnitt (8'') übergeht.

2. Kassette nach Anspruch 1, mit Seitenwangen an Deckel (3) und Klappe (4), dadurch gekennzeichnet, dass die Seitenwangen (3''; 4'') von Deckel (3) und Klappe (4) bei geschlossenem Aufnahmefach jeweils stumpf aufeinanderstossen und vorzugsweise zahnartig ineinandergreifende Kantenausformungen (3'''; 4''') aufweisen.

### Revendications

1. Cassette (1) pour le logement d'objets en forme de plaque, en particulier de disquettes, formée d'une partie inférieure (2) similaire à une boîte avec un couvercle (3) pouvant pivoter vers le haut, le palier de pivotement (5) du couvercle (3) étant situé à une distance du bord postérieur (3') du couvercle qui correspond à peu près à la hauteur de la partie inférieure (2) et un volet (4), qui forme le casier de logement, étant articulé dans la région du bord postérieur (3') du couvercle, caractérisée par le fait que le volet (4) s'engage, au moyen de doigts latéraux (7) de guidage dans un guide à coulisse (8) de la partie inférieure (2), lequel guide à coulisse (8) passe, dans le sens d'ouverture, d'un segment d'arc de cercle (8') autour du palier de pivotement (5) du couvercle à un segment terminal (8'') s'écartant de la trajectoire circulaire vers l'extérieur.

2. Cassette selon la revendication 1, avec joues latérales sur le couvercle (3) et le volet (4), caractérisée par le fait que, lorsque le casier est fermé, les joues latérales (3''; 4'') du couvercle (3) et du volet (4) butent chaque fois l'une sur l'autre, bout à bout, et présentent, de préférence, des déformations de bord (3'''; 4''') s'engageant l'une dans l'autre à la façon de dents.

### Claims

1. A case (1) for holding platelike articles, particularly diskettes, consisting of a boxlike base part (2), which is provided with a cover (3), which is adapted to be swung up, wherein the swivel mounting (5) for the cover (3) is spaced in front of the rear edge (3') of the cover by a distance which is approximately as large as the height of the base part (2), and a flap (4), which defines the holding compartment, is pivoted adjacent to the rear edge (3') of the cover, characterized in that the flap (4) has laterally disposed guide pins (7), which extend into a cam slot (8) of the base part (2), and said cam slot (8) has a transition in the opening sense from a section (8') forming an arc of a circle about the swivel mounting (5) for the cover to an end section (8''), which deviates from the circular path in an outward direction.

2. A case according to claim 1, which comprises side cheeks on the cover (3) and the flap (4), characterized in that corresponding side cheeks (3''; 4'') of the cover (3) and the flap (4) abut when the holding compartment is closed and preferably have interengaging serrated edges (3'''; 4''').